# EUROPEAN PATENT APPLICATION

(11) **EP 4 187 386 A1**
(43) Date of publication of application: **31.05.2023**
(21) Application number: 21849255.1
(22) Date of filing: 18.03.2021
(51) Int. Cl.: G06F 9/54

(54) **INTERPROCESS COMMUNICATION METHOD AND APPARATUS**

(30) Priority: 30.07.2020 CN 202010753141
(71) Applicant: Huawei Technologies Co., Ltd., Shenzhen, Guangdong 518129 (CN)
(72) Inventor: WANG, Nan, Shenzhen, Guangdong 518129 (CN); QI, Yifei, Shenzhen, Guangdong 518129 (CN); YU, Qingsong, Shenzhen, Guangdong 518129 (CN); FU, Ming, Shenzhen, Guangdong 518129 (CN)
(74) Representative: Körber, Martin Hans
(86) International application number: PCT/CN2021/081410
(87) International publication number: WO 2022/021896

(57) **Abstract**

An inter-process communication method is provided, and the method is applied to a computer system. The method includes: writing, based on a calling convention, to-be-transferred data between a sending process and a receiving process into a register group and a stack memory that are of a first execution entity of the sending process, and writing, into the register group, an address of the stack memory and a first value that indicates a data amount of data in the stack memory; and then replicating, based on the address of the stack memory and the corresponding first value, the to-be-transferred data from the stack memory of the first execution entity to a stack memory of a second execution entity by using a second execution entity of the receiving process. In the method, data is transferred by using a register group and a stack memory. This improves IPC communication performance. In addition, an interprocess communication solution of a multi-level IPC sequence is further provided. An intermediate process of the multi-level IPC sequence only needs to forward an address and a data length that are of a memory block, to implement cross-process replication. Therefore, communication performance of multi-level IPC is improved.

## Description

This application claims priority to Chinese Patent Application No. 202010753141.6, filed with the China National Intellectual Property Administration on July 30, 2020 and entitled "INTER-PROCESS COMMUNICATION METHOD AND APPARATUS", which is incorporated herein by reference in its entirety.

### TECHNICAL FIELD

This application relates to the field of computer technologies, and specifically, to an inter-process communication method and apparatus.

### BACKGROUND

With development of computer technologies, there are increasing requirements for communication between a plurality of processes and communication between a plurality of processes and a same process. Currently, a send (send)-receive (recv) semantic model based on a communication channel is usually used to implement interprocess message sending and receiving.

A kernel provides an inter-process communication (interprocess communication, IPC) service through the communication channel. The communication channel is created by a receiving process and authorized to a sending process. The sending process prepares to-be-sent data in a user mode as required, and then the sending process and the receiving process use a memory block (buffer) to send and receive the data respectively. In a sending procedure, the sending process needs to serialize the data, and in a receiving procedure, the sending process needs to deserialize the data. As a result, extra performance overheads during inter-process communication are caused.

### SUMMARY

This application provides an inter-process communication method, to reduce performance overheads during inter-process communication (interprocess communication, IPC). This application further provides a corresponding apparatus, a computer-readable storage medium, a computer program product, and the like.

A first aspect of this application provides an inter-process communication method, and the method is applied to a computer system. The method includes: writing, based on a calling convention, communication information into a register group of a first execution entity of a sending process, and writing first data of target data into a stack memory of the first execution entity, where the communication information includes a first value, and the first value indicates a data amount of the first data, the target data is data to be sent by the sending process to a first receiving process, and the calling convention indicates a sequence of writing the communication information into the register group and a sequence of writing the first data into the stack memory; replicating information in the register group of the first execution entity to a context of the first execution entity, where the information in the register group includes the communication information and an address of the stack memory, and the context of the first execution entity is information that is in the register group of the first execution entity that is stored in a kernel; and replicating the first data from the stack memory of the first execution entity to a stack memory of a second execution entity of the first receiving process based on the first value in the context of the first execution entity and the address of the stack memory, and the second execution entity is used by the first receiving process to communicate with the sending process.

In the first aspect, the calling convention (calling convention) is a regulation that is applied to an architecture such as x86 or arm and that is related to data writing and reading. "Data" in "data writing" and "data reading" includes values in various types of registers, and data to be transmitted between processes. The calling convention specifies a sequence of writing data into a register and a stack memory that are corresponding to an execution entity of the sending process, and a sequence of reading data from a register and a stack memory that are corresponding to an execution entity of a receiving process.

It should be noted that the register group includes a general-purpose register, and the general-purpose register may also be configured to store all or a part of the target data to be transferred between the sending process and the first receiving process. If there is a small quantity of to-be-transferred target data, the general-purpose register may transfer the target data. In this case, the first value used to describe the first data stored in a stack memory may be equal to 0. The communication information (ipcinfo) is written into the register group. The register group may further include a stack frame register, and an address of a stack memory is written into the stack frame register.

An execution entity (activation) is a part of a thread control block (thread control block, TCB), and the TCB further includes a scheduling entity. The TCB is a data structure used to store information related to a corresponding thread. One process may include a plurality of threads, and may also include one or more TCBs. The first execution entity is located in one TCB of the sending process, and the second execution entity is an execution entity of the first receiving process. During inter-process communication, the sending process needs to be trapped from the user mode to the kernel, to complete data transmission in the kernel. Therefore, after the sending process is triggered to trap into the kernel from the user mode, the first data is replicated from the stack memory of the first execution entity to the stack memory of the second execution entity in the kernel based on the first value in the context of the first execution entity and the address of the stack memory, so that data can be transferred.

It can be learned from the first aspect that, based on the calling convention, inter-process communication data is transferred by using the stack memory. Because an address of a stack memory always exists in a register group at a transmit end, the address of the stack memory does not need to be specially written for inter-process communication. This reduces communication overheads. In addition, at a receive end, the inter-process communication data may be directly read from a stack memory for processing, and the inter-process communication data does not need to be first read from a memory block and then written into the stack memory for processing. In this way, performance overheads of inter-process communication can be further reduced.

In a possible implementation of the first aspect, the target data further includes second data, and before the replicating information in the register group of the first execution entity to a context of the first execution entity, the method further includes: writing the second data into the register group of the first execution entity based on the calling convention, where the calling convention further indicates a sequence of writing the second data into the register group; the foregoing step of replicating the information in the register group of the first execution entity to the context of the first execution entity includes: replicating the second data, the communication information, and the address of the stack memory that are in the register group to the context of the first execution entity. The method further includes: replicating the context of the first execution entity into a context of the second execution entity; and writing the context of the second execution entity into a register group of the second execution entity.

In this possible implementation, the target data to be sent by the sending process to the first receiving process includes two parts: the first data and the second data. The first data is sent by using a stack memory, and the second data is sent by using a register group. The second data is sent by using the register group, so that a transmission speed of the second data can be increased, and inter-process communication performance is improved.

It should be understood that, in another implementation, the target data to be sent by the sending process to the first receiving process may be all sent by using the stack memory, or all sent by using the register group.

In a possible implementation of the first aspect, the target data further includes third data, the communication information further includes a second value, the second value indicates a data amount of the third data stored in a first memory block of the first execution entity, and the method further includes: writing an address of the first memory block into the register group of the first execution entity, and writing the third data into the first memory block of the first execution entity; and replicating the third data from the memory block of the first execution entity to a memory block of the second execution entity based on the second value and the address of the first memory block.

In this possible implementation, when the target data is large, a part of data, for example, the third data, may be transmitted by using the first memory block, to avoid occupying excessive stack memory. The data amount (that is, the second value) of the third data may be carried in the communication information and notified to the first receiving process. This facilitates transmission of big data is also while ensuring performance overheads.

In a possible implementation of the first aspect, the first execution entity further includes first page table information, and the second execution entity further includes second page table information; and the first page table information and the second page table information are used to replicate the first data from the stack memory of the first execution entity to a stack memory of the second execution entity, or replicate the third data from the first memory block of the first execution entity to a memory block of the second execution entity.

There are two types of manners of replicating data based on the first page table information and the second page table information.

In a first replication manner, the first data is replicated from a stack memory of the user mode to a memory of the kernel based on the first page table information, and then the first data is replicated from the memory of the kernel to the stack memory of the second execution entity based on the second page table information. For the third data, a principle of replicating the third data from the first memory block of the first execution entity to the memory block of the second execution entity is also the same.

In a second replication manner, the stack memory of the first execution entity is mapped to a first memory of the kernel based on the first page table information, the stack memory of the second execution entity is mapped to a second memory of the kernel based on the page table information of the second execution entity, and the first data is replicated from the first memory to the second memory. For the third data, a principle of replicating the third data from the first memory block of the first execution entity to the memory block of the second execution entity is also the same.

In a possible implementation of the first aspect, the method further includes: superimposing the second execution entity on the first execution entity, and writing a context of the second execution entity into the register group of the second execution entity, where the context of the second execution entity includes data in the context of the first execution entity; and reading, based on the calling convention, all or a part of the target data from the register group of the second execution entity and the stack memory of the second execution entity, and processing the all or the part of the target data to obtain a processing result; and the calling convention further indicates a sequence of reading the register group and the stack memory that are of the second execution entity.

In this possible implementation, the second execution entity may be superimposed on the first execution entity in a linked list manner. After the second execution entity is superimposed on the first execution entity, the first execution entity enters an inactive state, and the second execution entity takes over work of the first execution entity. The second execution entity superimposed on the first execution entity is switched to a user mode of the second execution entity. As the second execution entity is switched from the kernel to the user mode, the context of the second execution entity is written into the register group of the second execution entity. In this way, the second execution entity may read and process the target data in the user mode, to obtain the processing result. In addition, because the register, the stack memory, and the memory block transfer data at different speeds, the target data may be processed after all the target data arrives at the second execution entity, or a part of data that first arrives at the second execution entity may be processed first. It should be noted that, in the solutions of this application, the first execution entity is located in a thread or a TCB of the sending process, and the TCB further includes a scheduling entity. After the second execution entity is superimposed on the first execution entity, the TCB includes the second execution entity and the scheduling entity. Therefore, in this application, one thread in the sending process borrows the second execution entity in the first receiving process to process the target data, to obtain the processing result. It can be learned that this possible implementation provides a different form of inter-process communication.

In a possible implementation of the first aspect, the communication information further includes an identifier of a function used to process the target data; and the foregoing step of processing the all or the part of the target data to obtain the processing result includes: invoking the function based on the identifier of the function in the register group of the second execution entity, to process the all or the part of the target data to obtain the processing result.

In this possible implementation, the identifier of the function is transferred in the communication information. In this way, it can be ensured that the sending process can accurately invoke the function used to process the target data after borrowing a resource of the first receiving process. This improves data processing accuracy.

In a possible implementation of the first aspect, the first execution entity further includes an identifier of the sending process, and the method further includes: writing the identifier of the sending process into the context of the second execution entity, where the identifier of the sending process is used by the second execution entity to authenticate an identity of the sending process.

In this possible implementation, the identifier of the sending process is written into the context of the second execution entity. In a procedure in which the second execution entity is switched to the user mode, the identifier of the sending process is also written into the register group of the second execution entity. In this way, the receive end may read the identifier of the sending process from the register group, and then perform identity authentication. For an identity authentication procedure, refer to a principle of a trustlist. All secure processes are registered in the trustlist in advance. The receive end may search, based on the identifier of the sending process, whether the identifier is in the trustlist. If the identifier is in the trustlist, it may be determined that the sending process is a secure process. In this possible implementation, in a procedure in which an execution entity is used to perform inter-process communication, the identifier of the sending process is transferred by using the second execution entity, to perform identity authentication on the sending process. Therefore, inter-process communication security is improved.

In a possible implementation of the first aspect, the method further includes: determining a first value based on a data amount of the target data and the calling convention; and generating the communication information based on the first value.

In this possible implementation, before the communication information is written into the register group of the first execution entity in the sending process by using the calling convention, a data amount of the first data to be written into the stack memory, that is, the first value, may be first determined based on the data amount of the target data. Certainly, if the target data is large, a memory block further needs to be used to transfer data. A data amount of the third data to be written into the memory block, that is, a second value, may be further determined, and then both of the first value and the second value are added into the communication information. In this way, the first receiving process may be notified of the data amount of the target data in the stack memory and the memory block by using the communication information, and then the first receiving process reads the corresponding first data from the stack memory and reads the corresponding third data from the memory block to perform data processing.

In a possible implementation of the first aspect, the method further includes: allocating the second execution entity from a resource pool of execution entities; and creating a new execution entity in the resource pool if a quantity that is of available execution entities in the resource pool and that is obtained by subtracting the second execution entity from the resource pool is less than a lower threshold, where the lower threshold indicates a lower limit of the quantity of available execution entities in the resource pool.

In this possible implementation, the lower threshold is properly set, so that when the sending process applies for an IPC service, an execution entity in the first receiving process can provide the service, and a quantity of available execution entities is controllable. This avoids a problem of reliability deterioration caused by blocking of the sending process.

In a possible implementation of the first aspect, the method further includes: after the processing result is obtained, releasing the second execution entity; and if a quantity that is of available execution entities and that is obtained by adding the second execution entity to the resource pool is greater than an upper threshold, deleting at least one execution entity from the resource pool, where the upper threshold indicates an upper limit of the quantity of available execution entities in the resource pool.

In this possible implementation, the upper threshold is properly set, so that excessive execution entities are not generated, avoiding excessive memory overheads due to excessive execution entities.

In a possible implementation of the first aspect, the first receiving process is located in a multi-level IPC sequence, the multi-level IPC sequence further includes a second receiving process, and the second receiving process follows the first receiving process in a sequence of communicating with the sending process; and the method further includes: transferring, by using the second execution entity of the first receiving process, an address of a second memory block of the first execution entity, the first page table information of the first execution entity, and a third value to a third execution entity of the second receiving process, where the third value indicates a data amount of fourth data sent by the sending process to the second receiving process; and replicating the fourth data from the second memory block of the first execution entity to a memory block of the third execution entity based on the address of the second memory block of the first execution entity, the first page table information of the first execution entity, and the third value.

In this possible implementation, when a large amount of data needs to be transferred at a plurality of levels in the multi-level IPC sequence, the first page table information of the sending process, the address of the second memory block of the first execution entity, and the data amount of the fourth data need to be recorded in only an execution entity of an intermediate process at each level (for example, the first receiving process). In this way, cross-process replication needs to be performed only based on the page table information of the sending process and the second receiving process, so that the fourth data is transferred from the sending process to the second receiving process. It should be noted that another receiving process may be further included between the first receiving process and the second receiving process, whether one or more intermediate processes are included between the sending process and the second receiving process, in this application, only the address of the second memory block, the data amount of the fourth data, and the first page table information need to be transferred from the sending process to the second receiving process, and the second receiving process needs to perform cross-process replication on the fourth data only once. Therefore, data transmission performance is greatly improved.

In a possible implementation of the first aspect, the method further includes: transferring, by using the second execution entity of the first receiving process, the identifier of the sending process to the third execution entity of the second receiving process, where the identifier of the sending process is used by the third execution entity to authenticate the identity of the sending process after the third execution entity returns to the user mode.

In this possible implementation, during inter-process communication, the second receiving process can directly read the identifier that is of the sending process and that is transferred by the kernel, to perform identity authentication. Therefore, inter-process communication security is improved.

A second aspect of this application provides an inter-process communication apparatus. The interprocess communication apparatus has a function of implementing the method according to any one of the first aspect or the possible implementations of the first aspect. The function may be implemented by hardware, or may be implemented by hardware executing corresponding software. The hardware or the software includes one or more modules, for example, a processing unit, corresponding to the foregoing functions.

A third aspect of this application provides a computer device. The computer device includes at least one processor, a memory, an input/output (input/output, I/O) interface, and computer-executable instructions that are stored in the memory and that can run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the processor performs the method according to any one of the first aspect or the possible implementations of the first aspect.

A fifth aspect of this application provides a computer program product that stores one or more computer-executable instructions. When the computer-executable instructions are executed by a processor, the processor performs the method according to any one of the first aspect or the possible implementations of the first aspect.

A sixth aspect of this application provides a chip system, where the chip system includes at least one processor, and the at least one processor is configured to support an inter-process communication apparatus in implementing the function in any one of the first aspect or the possible implementations of the first aspect. In a possible design, the chip system may further include a memory. The memory is configured to store program instructions and data that are necessary for the inter-process communication apparatus. The chip system may include a chip, or may include a chip and another discrete component.

In this embodiment of this application, based on the calling convention, inter-process communication data is transferred by using a stack memory. Because an address of the stack memory always exists in a register group at a transmit end, the address of the stack memory does not need to be specially written for inter-process communication. This reduces communication overheads. In addition, at a receive end, the inter-process communication data may be directly read from a stack memory for processing, and the inter-process communication data does not need to be first read from a memory block and then written into the stack memory for processing. In this way, performance overheads of the inter-process communication can be further reduced. In addition, in this application, in a communication procedure of the multi-level IPC sequence, data does not need to be transferred at a plurality of levels by using an intermediate process, and data transmission of the multi-level IPC sequence can be completed through cross-process replication once. This greatly reduces communication overheads, and improves inter-process communication performance.

### BRIEF DESCRIPTION OF DRAWINGS

FIG. 1 is a schematic diagram of an embodiment of a computer system according to an embodiment of this application;
FIG. 2 is a schematic diagram of an embodiment of an inter-process communication method according to an embodiment of this application;
FIG. 3A is a schematic diagram of another embodiment of an inter-process communication method according to an embodiment of this application;
FIG. 3B is a schematic diagram of another embodiment of an inter-process communication method according to an embodiment of this application;
FIG. 4 is a schematic diagram of another embodiment of an inter-process communication method according to an embodiment of this application;
FIG. 5A and FIG. 5B are schematic diagrams of another embodiment of an inter-process communication method according to an embodiment of this application;
FIG. 6 is a schematic diagram of another embodiment of an inter-process communication method according to an embodiment of this application;
FIG. 7 is a schematic diagram of another embodiment of an inter-process communication method according to an embodiment of this application;
FIG. 8 is a schematic diagram of an embodiment of an inter-process communication apparatus according to an embodiment of this application; and
FIG. 9 is a schematic diagram of an embodiment of a computer device according to an embodiment of this application.

### DESCRIPTION OF EMBODIMENTS

The following describes embodiments of this application with reference to the accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a procedure, method, system, product, or device that includes a list of steps or units is not necessarily limited to those expressly listed steps or units, but may include other steps or units not expressly listed or inherent to such a procedure, method, product, or device.

Embodiments of this application provide an inter-process communication method, to reduce performance overheads during inter-process communication (interprocess communication, IPC). This application further provides a corresponding apparatus, a computer-readable storage medium, a computer program product, and the like. Details are separately described in the following.

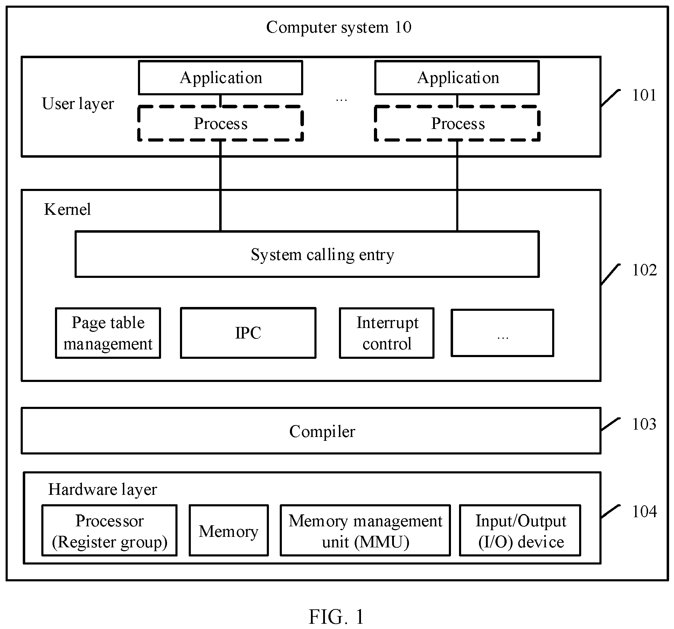

The inter-process communication method provided in embodiments of this application is applied to a computer system, and the computer system may be a server, a terminal device, or a virtual machine (virtual machine, VM). For an architecture of the computer system, refer to FIG. 1.

The terminal device (which may also be referred to as user equipment (user equipment, UE)) is a device having a wireless transceiver function, and may be deployed on land, for example, including an indoor or outdoor device, a handheld device, or a vehicle-mounted device, may be deployed on water (for example, on a ship), or may be deployed in the air (for example, on an airplane, a balloon, and a satellite). The terminal may be a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), and the like.

FIG. 1 is a schematic diagram of an architecture of a computer system.

As shown in FIG. 1, an architecture of a computer system 10 includes a user layer 101, a kernel 102, a compiler 103, and a hardware layer 104.

The user layer 101 includes a plurality of applications, and each application corresponds to a process. Alternatively, the process may be understood as an abstraction or an entity of an application. A process may be referred to as a sending process when executing a sending task of a corresponding application, and may be referred to as a receiving process when executing a receiving task of a corresponding application. An inter-process communication procedure may be started by a user by triggering an application. For example, the user opens a web page in a browser, and when the user browses a message on the web page, a plug-in is required to load full text of the message. In this scenario, the web page is the sending process, the plug-in is the receiving process, and a process of the web page needs to send a corresponding loading indication of the message to a process of the plug-in, so that the process of the plug-in loads the full text of the message.

The main purpose of inter-process communication is to implement data sharing and information exchange between cooperative processes in a same computer system. Two or more parties involved in communication may send or receive a message, to implement data transmission between processes. Therefore, data communication is completed. In two or more processes that communicate with each other, a process that sends data may be referred to as a sending process, and a process that receives data may be referred to as a receiving process. A process running at the user layer 101 is referred to as a process running in a user mode. Inter-process communication is usually triggered in the user mode, but a procedure of inter-process communication can be implemented only by the kernel 102.

The kernel 102 is an operating system (operating system, OS) that is responsible for managing a critical resource, and provides a system call entry for a process in the user mode, so that the process can provide a service in the kernel. For example, the process may provide a service such as inter-process communication, page table management, and interrupt control. Inter-process communication is used as an example. From the user mode to the kernel, the sending process may apply for a service for sending data by using a system call, and the receiving process may apply for a service for receiving data by using the system call.

The compiler 103 may provide a compilation service in an inter-process communication procedure. In this application, the compiler may write communication information into a register group, and may write data to be transmitted between processes into the register group.

The hardware layer 104 includes a hardware resource on which running of the kernel 102 is based, for example, a processor, a memory, a memory management unit (memory management unit, MMU), and an input/output (input/output, I/O) device. The processor may include a register group, and the register group may include a plurality of types of registers, for example, a stack frame register, a general-purpose register, and a non-volatile (callee-saved) register. The stack frame register is configured to store an address of a stack memory. The general-purpose register may be configured to store target data to be transmitted between processes, or may be configured to store other information, for example, general information (ipcinfo). The non-volatile register may be configured to store some parameters other than the target data. For example, the non-volatile register may also store the communication information.

An MMU is computer hardware responsible for processing a memory access request from a central processing unit (central processing unit, CPU). A function of the MMU includes translation from a virtual address to a physical address, memory protection, and CPU cache control.

In a computer system, a process includes a thread. A process is a running entity of a program and a basic unit for the system to allocate and invoke resources. A thread is a minimum unit for program scheduling. A same process may include a plurality of threads, and the plurality of threads have their own scheduling attributes and share process resources between each other. In an operating system, a process control block (processing control block, PCB) is used to manage a process, and a thread control block (thread control block, TCB) is used to manage a thread. The PCB is a data structure configured in an OS to manage a process. The PCB records information about running of a process. The TCB may be a subset of the PCB, or it may be understood that one PCB includes a plurality of TCBs, and each TCB corresponds to one thread. Different threads in a sending process may communicate with different threads in a same receiving process, or may communicate with threads in different receiving processes. Similarly, a thread in a receiving process may also communicate with threads in a plurality of different sending processes. Therefore, inter-process communication may also be understood as inter-thread communication in different processes.

In a communication procedure, the sending process needs one TCB to support current communication, and the TCB may include an execution entity (activation) and a scheduling entity. The execution entity is a part of a thread, and includes information about a register required for running the thread, information about a stack memory, information about a memory block, and the like. The scheduling entity is also a part of the thread, and includes scheduling-related information such as a priority required for running the thread. In this embodiment of this application, the receiving process needs to provide one execution entity to support current communication.

The inter-process communication method provided in this embodiment of this application includes two cases. A first case is communication between two processes, that is, one sending process and one receiving process. A second case includes multi-level inter-process communication, that is, one sending process and a plurality of receiving processes. This case may also be referred to as inter-process communication of a multi-level IPC sequence. It should be noted that in this application, "a plurality of" includes "two". "A plurality of" may also be referred to as "at least two". The following separately describes the two cases.

Both of the communication between the two processes or the inter-process communication of the multi-level IPC sequence, the inter-process communication method provided in this embodiment of this application may be implemented by using a device having a computer system, for example, a terminal device. Specifically, the foregoing inter-process communication procedure may be implemented by one or more processors in the computer system.

The first case: communication between two processes, that is, one sending process and one receiving process.

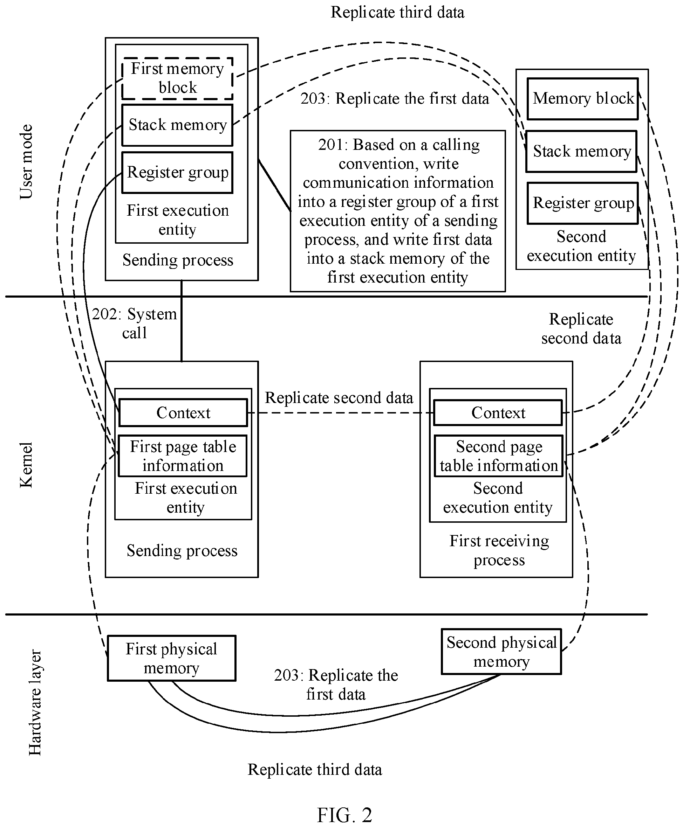

As shown in FIG. 2, an embodiment of an inter-process communication method provided in an embodiment of this application includes the following steps.

201: Based on a calling convention, write communication information into a register group of a first execution entity of the sending process, and write first data into a stack memory of the first execution entity.

Step 201 may be performed in the user mode.

The first data is included in target data to be sent by the sending process to a first receiving process.

A calling convention (calling convention) is a regulation related to data writing and reading. "Data" in "data writing" and "data reading" includes values in various types of registers and data to be transmitted between processes. The calling convention specifies a sequence of writing data into a register and a stack memory that are corresponding to an execution entity of the sending process, and a sequence of reading data from a register and a stack memory that are corresponding to an execution entity of a receiving process.

The first execution entity is used by the sending process to communicate with the first receiving process. A register group may include a plurality of types of registers, for example, a stack frame register, a general-purpose register, and a non-volatile register. The stack frame register is configured to store an address of a stack memory. The general-purpose register may be configured to store a part or all of the target data. The stack memory may be configured to store a part or all of the target data. A first memory block may also store a part or all of the target data.

Communication information (ipcinfo) is a concept newly proposed in this embodiment of this application. The communication information may include a first value, and the first value indicates a data amount of the first data.

The general-purpose register may also store a part of data in the target data, and the part of data may be referred to as second data. When the second data exists, the second data is written into a register group of the first execution entity based on the calling convention, and information in the register group of the first execution entity further includes the second data.

If the memory block also stores a part of data in the target data, the part of data is referred to as third data. In this case, the communication information may further include a second value, and the second value indicated a data amount of the third data.

If the part of data of the target data is not written into the register group, the target data does not include the second data. If the memory block does not include the third data, the target data is the first data. If the second data is written into the register group, but the memory block does not include the third data, the target data is the first data and the second data. If the second data is written into the register group, and the memory block also includes the third data, the target data is the first data, the second data and the third data.

The communication information may further include an identifier of a function used to process the target data, and the function may be a receiving function.

The first value in the communication information or the second value that may be further included in the communication information may be determined by the compiler in the computer system in FIG. 1. The compiler may determine the first value based on a size of the target data and a requirement on an amount of data to be written into the register group and the stack memory. If the first value is large, data that is not stored in the register group and the stack memory may be placed in a first memory block, and an amount of data stored in a second memory block may be represented by the second value. In this case, the communication information also includes the second value, that is, the communication information is generated based on the first value, the second value, and the identifier of the function used to process the target data.

202: Replicate the information in the register group of the first execution entity to a context of the first execution entity by using a system call.

This step may be implemented by triggering, by using the system call, the sending process to trap into the kernel.

The information in the register group includes the communication information and an address of the stack memory, and may also include the second data, an address of the first memory block, and the like. The context of the first execution entity is information that is stored in the kernel and that is in the register group of the first execution entity. Certainly, the register group further includes other information or values, and the information or values are replicated to the context of the first execution entity as the sending process is trapped into the kernel.

203: Replicate the first data from the stack memory of the first execution entity to a stack memory of the second execution entity based on the first value in the context of the first execution entity and the address of the stack memory.

The second execution entity may be an execution entity allocated from a resource pool of execution entities of the first receiving process. The resource pool usually includes a plurality of execution entities. When the sending process applies to communicate with the first receiving process, an execution entity may be allocated from the resource pool to the sending process.

The address of the stack memory indicates a start location at which the first data is stored in the stack memory, and the first value indicates a data length of the first data. Therefore, the first data may be found in the stack memory of the first execution entity based on the address of the stack memory and the first value, and the first data may be replicated to a stack memory that is of the second execution entity and that is in the kernel.

If the target data further includes the second data, before step 202, the method further includes: writing the second data into the register group of the first execution entity based on the calling convention, where the calling convention further indicates a sequence of writing the second data into the register group.

Then, the foregoing step 202 may include: replicating, to the context of the first execution entity, the second data, the communication information, and the address of the stack memory that are in the register group.

After step 202 is performed, the method may further include: replicating the context of the first execution entity to a context of the second execution entity; and writing the context of the second execution entity into a register group of the second execution entity.

The context of the second execution entity is information that is stored in the kernel and that is in the register group of the second execution entity.

If the target data further includes the third data, the third data may be further replicated from the first memory block of the first execution entity to a memory block of the second execution entity based on the second value and an address of the first memory block.

Optionally, the first execution entity further includes first page table information, the second execution entity further includes second page table information, and the first page table information and the second page table information are used to replicate the first data from the stack memory of the first execution entity to the stack memory of the second execution entity, or replicate the third data from the first memory block of the first execution entity to the memory block of the second execution entity.

The first page table information indicates a mapping relationship between a virtual address and a physical address that are of memory space of the first execution entity, and the memory space of the first execution entity includes the stack memory of the first execution entity and the first memory block. The second page table information indicates a mapping relationship between a virtual address and a physical address that are of memory space of the second execution entity, and the memory space of the second execution entity includes the stack memory and the memory block of the second execution entity.

In this embodiment of this application, a procedure of replicating the first data or the third data based on the first page table information and the second page table information may be implemented in the following two manners.

In a first replication manner, the first data is replicated from a stack memory of the user mode to a memory of the kernel based on the first page table information, and then the first data is replicated from the memory of the kernel to the stack memory of the second execution entity based on the second page table information. For the third data, a principle of replicating the third data from the first memory block of the first execution entity to the memory block of the second execution entity is also the same, except that the stack memory of the first execution entity is replaced with the first memory block of the first execution entity, and the stack memory of the second execution entity is replaced with the memory block of the second execution entity.

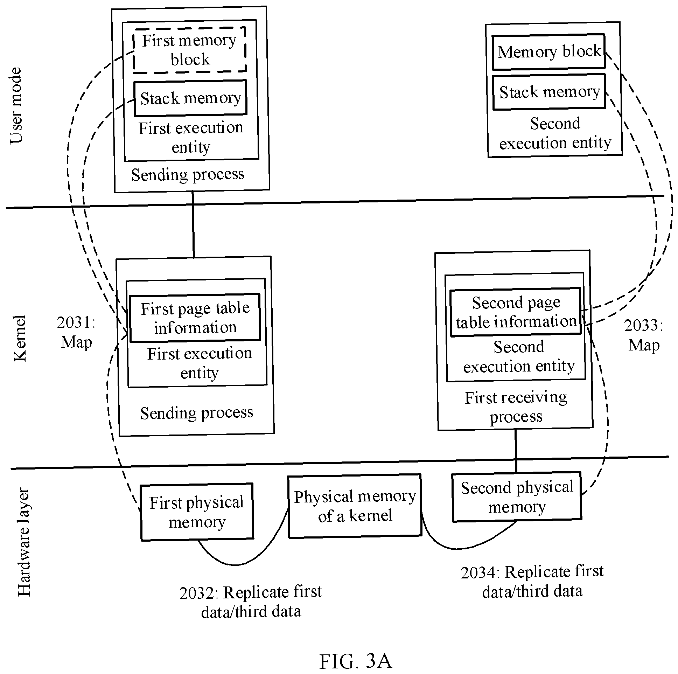

Refer to FIG. 3A. The procedure of the first replication manner may include the following steps:
2031: Based on an address (a virtual address) of the stack memory of the first execution entity and a mapping relationship that is between the virtual address and a physical address and that is included in the first page table information, determine a first physical address corresponding to the address of the stack memory, and further determine a first physical memory.
2032: Based on the first physical address and the first value, read the first data from the first physical memory of the first execution entity, and place the first data in a physical memory of the kernel.
2033: Determine, in the kernel based on an address of the stack memory of the second execution entity and the second page table information, a second physical address corresponding to the stack memory of the second execution entity, and then determine a required second physical memory of the second execution entity based on a length of the first data indicated by the first value.
2034: Replicate the first data from a memory of the kernel to the second physical memory of the second execution entity.

In a second replication manner, the stack memory of the first execution entity is mapped to a first memory of the kernel based on the first page table information, the stack memory of the second execution entity is mapped to a second memory of the kernel based on the page table information of the second execution entity, and the first data is replicated from the first memory to the second memory. For the third data, a principle of replicating the third data from the first memory block of the first execution entity to the memory block of the second execution entity is also the same, except that the stack memory of the first execution entity is replaced with the first memory block of the first execution entity, and the stack memory of the second execution entity is replaced with the memory block of the second execution entity.

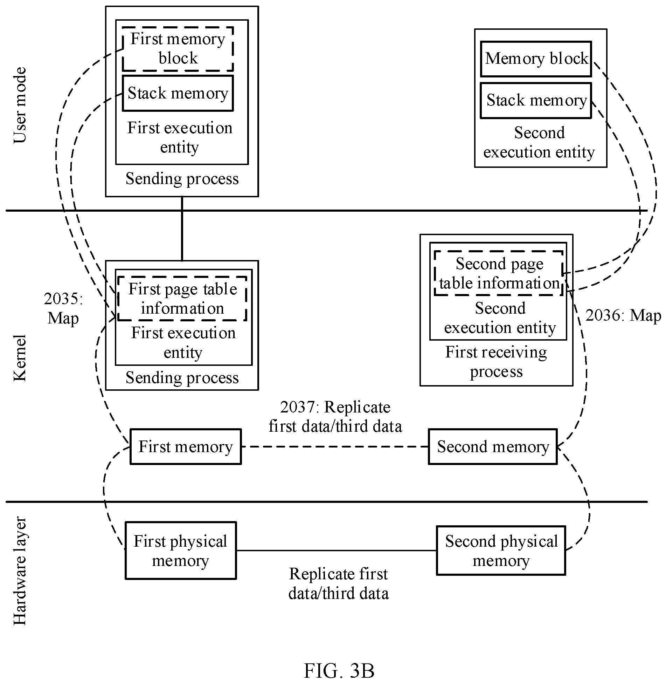

Refer to FIG. 3B. A procedure of the second replication manner may include the following steps:
2035: Based on a mapping relationship that is between memory space of the user mode of the first execution entity and memory space of the kernel and that is indicated by the first page table information and the address of the stack memory of the first execution entity, determine the first memory corresponding to the first execution entity in the kernel.
2036: Based on a mapping relationship that is between memory space of the user mode of the second execution entity and the memory space of the kernel and that is indicated by the second page table information and the address of the stack memory of the second execution entity, determine the second memory corresponding to the second execution entity in the kernel.
2037: Replicate the first data from the first memory to the second memory.

The first memory is mapped to the stack memory of the first execution entity, and it can be learned from the foregoing procedure corresponding to FIG. 3A that the stack memory of the first execution entity is mapped to the first physical memory of the first execution entity, the second memory is mapped to the stack memory of the second execution entity, and the stack memory of the second execution entity is mapped to the second physical memory of the second execution entity. Therefore, the first data is replicated from the first memory to the second memory in a virtual form, and the first data is replicated from the first physical memory to the second physical memory in a physical form.

In this embodiment of this application, based on the calling convention, inter-process communication data is transferred by using a stack memory. Because an address of the stack memory always exists in a register group at a transmit end, the address of the stack memory does not need to be specially written for inter-process communication. This reduces communication overheads. In addition, the inter-process communication data may be directly read from a stack memory for processing at a receive end, and the inter-process communication data does not need to be first read from a memory block and then written into the stack memory for processing. In this way, performance overheads of the inter-process communication can be further reduced.

In addition, in this embodiment of this application, if there is a small data amount of the target data to be transferred between the sending process and the first receiving process, the general-purpose register may complete data transfer. In this case, the first value used to describe the first data stored in the stack memory may be equal to 0.

It can be learned from FIG. 2, FIG. 3A, and FIG. 3B that the stack memory, the memory block, and the first memory and the second memory that are of the kernel are all logical memory space, and the first physical memory and the second physical memory are storage devices of hardware. The foregoing describes that the first data is replicated from the stack memory of the first execution entity to the stack memory of the second execution entity, and the third data is replicated from the first memory block of the first execution entity to the memory block of the second execution entity. The first data and the third data herein may be understood as logical data. The foregoing also describes that the first data and the third data are replicated from the first physical memory to the second physical memory. The first data and the third data herein may be understood as physical data. Whether the first data and the third data are the logical data or the physical data, both of the logical data and the physical data in this application refer to a same piece of data, and when the logical data is replicated, the physical data is synchronously replicated.

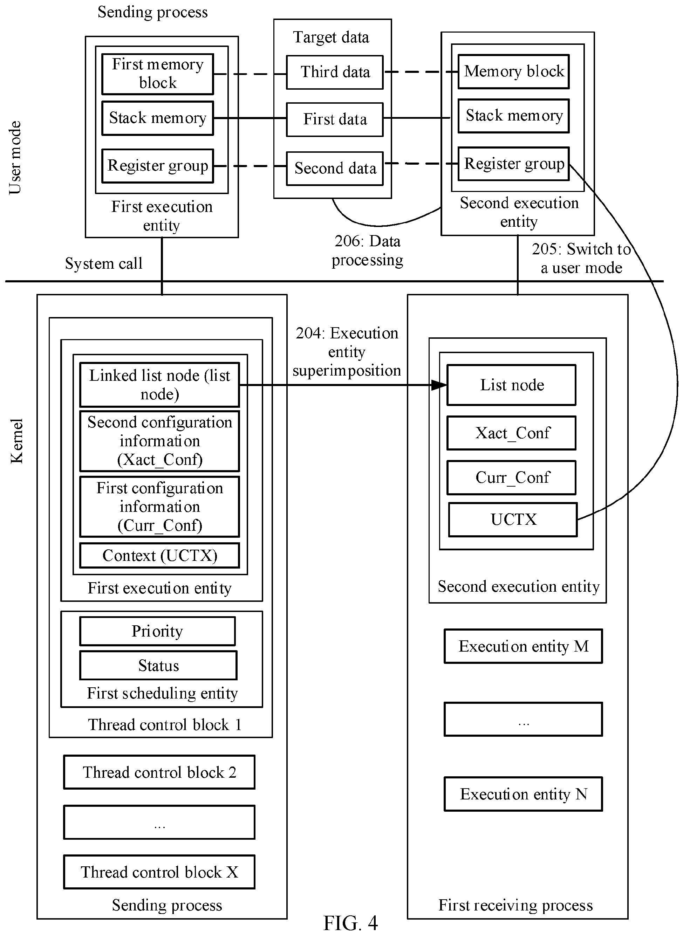

Optionally, according to the inter-process communication method provided in this embodiment of this application, execution entities may be superimposed. To be specific, the second execution entity may be superimposed on a scheduling entity of the sending process to process data, and then a processing result is returned. In addition, to ensure inter-process communication security, an identity of the sending process may be verified in the solution provided in this embodiment of this application. With reference to FIG. 4, the following further describes the interprocess communication method provided in an embodiment of this application.

As shown in FIG. 4, in the kernel, the first execution entity of the sending process includes a linked list node (list node), first configuration information (Curr_Conf), second configuration information (Xact_Conf), and a context (UCTX). The second execution entity also includes a linked list node, first configuration information, second configuration information, and a context. Each execution entity includes the foregoing four parts, but content included in the four parts may be different.

The linked list node of the first execution entity and the linked list node of the second execution entity are associated by using an arrow, and the arrow indicates that the second execution entity is superimposed on the first execution entity. After the second execution entity is superimposed on the first execution entity, the first execution entity enters an inactive (inactive) state, and the second execution entity takes over work of the first execution entity. The first execution entity is located in a thread or a TCB of the sending process. The TCB further includes a scheduling entity. After the second execution entity is superimposed on the first execution entity, the TCB includes the second execution entity and the scheduling entity. Therefore, in this application, one thread in the sending process can run content of the second execution entity to process data.

The first configuration information includes an identifier of a current process and page table information of the current process, and the second configuration information includes an identifier of a process that initiates communication and page table information of the process that initiates communication. In this way, the first configuration information of the first execution entity may include an identifier of the sending process and the first page table information. A location of the second configuration information of the first execution entity may not be used, that is, the second configuration information does not include specific content, or content in the second configuration information may be the same as content in the first configuration information. The first configuration information of the second execution entity includes an identifier of the first receiving process and the second page table information. The second configuration information includes the identifier of the sending process and the first page table information. In a scenario of a multi-level IPC sequence, the second configuration information includes an identifier of a process that initiates the multi-level IPC sequence, that is, an identifier of a first process in the entire IPC sequence.

The context of the first execution entity includes information in a register group of the first execution entity. The context of the second execution entity includes information in a register group of the second execution entity.

The first execution entity may be an execution entity in a thread control block 1, the thread control block 1 further includes a scheduling entity, and the scheduling entity includes a scheduling priority (priority) of a current sending task of the sending process and a state (state) of the sending process. The thread control block 1 may be one of a plurality of thread control blocks of the sending process, and the sending process may further include a plurality of thread control blocks such as a thread control block 2 to a thread control block X, where X is an integer greater than 2.

The second execution entity may be an execution entity in a resource pool of execution entities of the first receiving process, and the resource pool further includes other execution entities, for example, an execution entity M to an execution entity N.

In a procedure in which the sending process communicates with the first receiving process, for a procedure from time when the sending process in the user mode starts to run to time when the first data is replicated in the kernel to the stack memory of the second execution entity, refer to corresponding content in the embodiments corresponding to FIG. 2, FIG. 3A, and FIG. 3B for understanding. The following describes the subsequent content.

204: Superimpose the second execution entity on the first execution entity.

A procedure of performing entity superposition may be implemented in a linked list manner.

205: The second execution entity switches to the user mode.

A thread control block of the sending process includes the second execution entity and an original scheduling entity, and the second execution entity switches to the user mode. When the kernel enters the user mode, content in the context of the second execution entity is written into the register group of the second execution entity in the user mode. It can be learned from the foregoing descriptions of the first page table information and the second page table information that the first data may be replicated to the stack memory of the second execution entity in the first replication manner or the second replication manner. If the target data includes third data, the third data is also replicated to the memory block of the second execution entity in the first replication manner or the second replication manner.

206: Read all or a part of the target data and process the all or the part of the target data, to obtain a processing result.

The communication information is replicated from the register group of the first execution entity to the context of the first execution entity along with the system call. After entering the kernel, the communication information is replicated to the context of the second execution entity along with the context of the first execution entity, and then the communication information is replicated to the register group of the second execution entity as the second execution entity switches to the user mode.

Because the communication information includes an identifier of a function used to process the target data, the identifier of the function used to process the target data is also replicated to the register group of the second execution entity. In this way, the function may be called based on the identifier of the function in the register group of the second execution entity, to process the all or the part of the target data to obtain the processing result.

Because the register, the stack memory, and the memory block transfer data at different speeds, the target data may be processed after all the target data arrives at the second execution entity, or a part of data that first arrives at the second execution entity may be processed first.

The second configuration information includes the identifier of the sending process. Before the second execution entity is switched to the user mode, the identifier of the sending process is written into the context of the second execution entity. In a procedure in which the second execution entity is switched to the user mode, the identifier of the sending process is also written into the register group of the second execution entity. In this way, the receive end may read the identifier of the sending process from the register group, and then perform identity authentication. For an identity authentication procedure, refer to a principle of a trustlist. All secure processes are registered in the trustlist in advance, and the receive end may search, based on the identifier of the sending process, whether the identifier is in the trustlist. If the sending process is in the trustlist, it may be determined that the sending process is a secure process. Therefore, in this possible implementation, in a procedure in which an execution entity is used to perform inter-process communication, the second execution entity is borrowed to transfer the identifier of the sending process, to perform identity authentication on the sending process. This improves security of inter-process communication.

After the processing result is obtained, the second execution entity may be released, the original first execution entity continues to execute work of the sending process, and receives a processing result returned after the second execution entity processes the target data. In this way, one time of IPC is completed.

In this embodiment of this application, one thread in the sending process borrows the second execution entity in the first receiving process to process the target data, to obtain the processing result. It can be learned that this possible implementation provides a different form of inter-process communication.

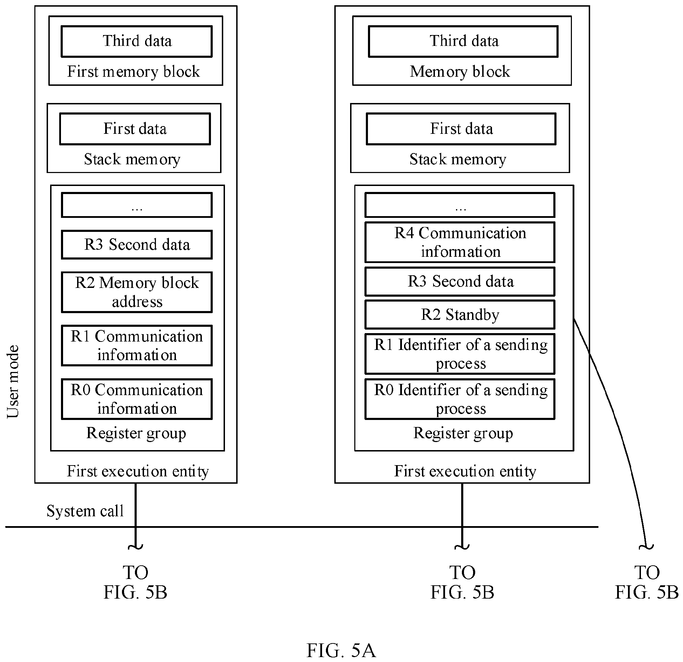

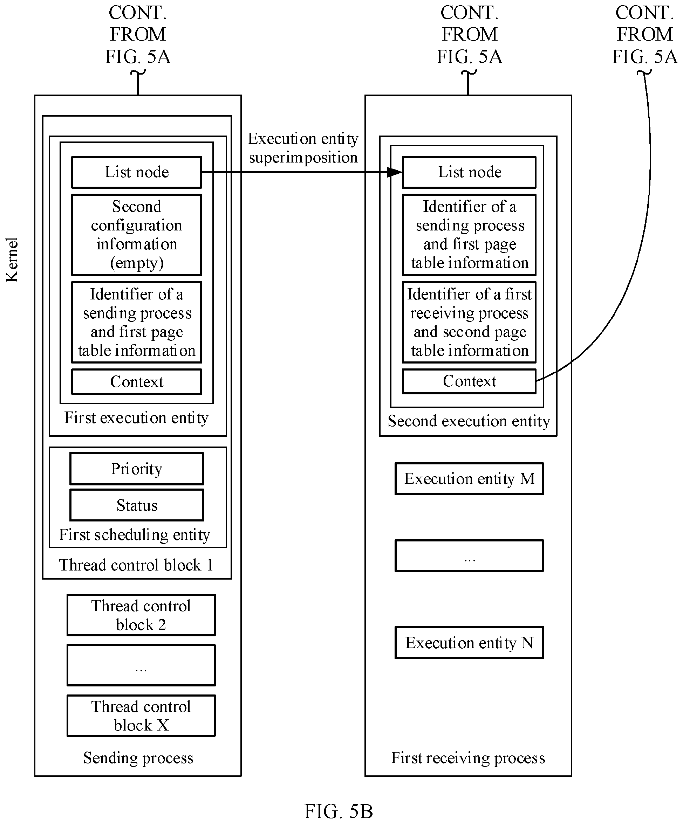

For ease of understanding, the foregoing inter-process communication procedure is combined into a microkernel system based on an ARM-V7 architecture. In a structure shown in FIG. 5A and FIG. 5B, a first execution entity of a sending process includes a register group, and the register group includes four general-purpose registers R0 to R3. Based on a calling convention, the four general-purpose registers R0 to R3 of the first execution entity may be configured to transfer communication information and target data. The register group may further include another register, for example, a stack frame register, which is not all shown in FIG. 5A and FIG. 5B. A register group of a second execution entity includes four general-purpose registers R0 to R3, R4 may be a non-volatile register, and the register group may further include another register, for example, a stack frame register, which is not all shown in FIG. 5A and FIG. 5B.

It should be noted that the method provided in this application may also be applicable to another type of kernel architecture.

Based on the calling convention, the communication information (ipcinfo) may be encoded by using a 64-bit unsigned integer in a user mode of a sending process, and stored in the register R0 and the register R1. Certainly, the 64 bits herein are merely an example, and a quantity of bits of the communication information is not limited in this application. The 64 bits are used as an example, bits of the communication information in ascending order are respectively: 14 bits: a data amount (a second value) of data sent by the sending process by using a memory block. One bit: 0 indicates that a new transaction (transaction) is started, and 1 indicates that a current transaction is forwarded. In this embodiment of this application, a multi-level IPC sequence, or a sequence having only one sending process and one receiving process is referred to as a transaction. A transaction that is started for the first time refers to a new transaction. If subsequent IPC is performed on the basis of an existing transaction, the IPC in this case indicates that the current transaction is forwarded. 11 bits: an identifier of a function used by a user to process the target data; 5 bits: an amount of data sent by the sending process through a stack memory (the amount of data indicates a multiple of 4 bytes identified by a 5-bit binary value (that is, a maximum of 32 bytes)). The amount of data may also be described as a size of data. 33 bits: reserved for extension.

R2 is used to transfer an address of a first memory block. An address of a stack memory may be transferred by using a stack frame register in the register group, and the stack frame register is not shown in FIG. 5A and FIG. 5B.

A general-purpose register R3 is not used in the general-purpose registers, and the general-purpose register R3 may be used to transfer a part of the target data, that is, the second data described above. The second data may be a first piece of data in the target data.

Based on the calling convention, the sending process and a first receiving process may respectively use a maximum of 128-byte memory represented by the foregoing 5 bits to send and receive data transferred by using the stack memory. Certainly, the 128 bytes are also used as an example for description, and a specific data amount of data transferred by using the stack memory may be set according to a requirement.

The sending process is trapped into a kernel from the user mode by using a system call.

In the kernel, each process corresponds to a structure CNode used to record authorization information, and each CNode has a unique identifier cnode_idx represented by a 32-bit unsigned integer. In this application, the cnode_idx is used to represent an identifier of a process, the identifier of the process may be used to authenticate an identity of the sending process.

A cnode_idx of the first execution entity and address space information of the first execution entity are recorded in the first configuration information (Curr_Conf) of the first execution entity, where the address space information indicates address space of a memory corresponding to the first execution entity in the kernel. For understanding, refer to the first page table information.

An identifier and address space information of a process in which a transaction initiator is located are recorded in the second configuration information (Xact_Conf) of the first execution entity. Because only one sending process and one receiving process are involved in this scenario, content in the second configuration information is empty, or may be the same as content of the first configuration information.

The second execution entity uses a 64-bit unsigned integer to encode a cnode_idx of a process in which a previous-level execution entity is located, and stores the cnode_idx in the register R0 and the register R1. In this scenario, only one sending process and one receiving process are involved. Therefore, processes in the register R0 and the register R1 may be represented in a same manner.

The register R2 in the second execution entity is used for reservation (a reserved register may be used to transfer user-mode identity information that is preset by the first receiving process for the sending process, and the user-mode identity information may be used to accelerate data processing).

The second data is received by using the general-purpose register R3 in the second execution entity.

The first data is received by using a stack memory in the second execution entity.

The third data is received by using a memory block in the second execution entity.

The communication information may be stored in the register R4. If the communication information uses a most significant 32 reserved bits, R4 and R5 are required to store the communication information.

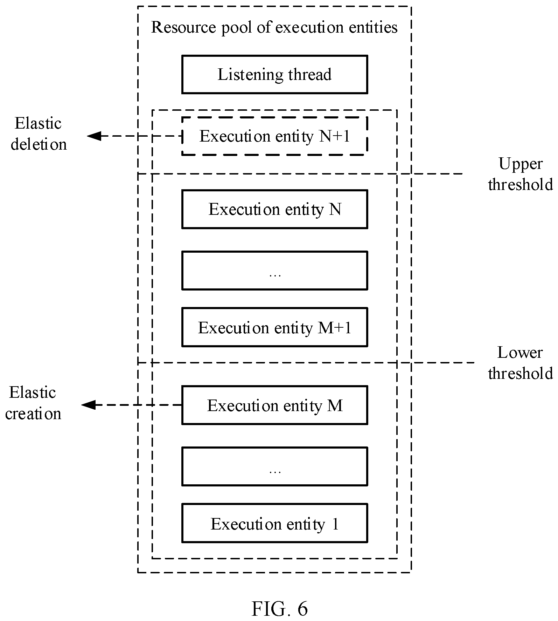

In this embodiment of this application, the second execution entity is from a resource pool of execution entities of the first receiving process. In this embodiment of this application, elastic management of adding or deleting an execution entity in the resource pool is further performed. A procedure of adding or deleting the execution entity may be understood with reference to FIG. 6.

As shown in FIG. 6, a listening thread may be disposed in the resource pool of execution entities. The listening thread is configured to listen to allocation or release of an execution entity in the resource pool, or is configured to monitor a quantity of remaining execution entities in the resource pool. The remaining execution entities may also be understood as execution entities that can be used.

A lower threshold and an upper threshold are set in the resource pool. The lower threshold indicates a lower limit of a quantity of available execution entities in the resource pool. The upper threshold indicates an upper limit of a quantity of available execution entities in the resource pool.

It can be learned from FIG. 6 that the lower threshold is M+1 execution entities, and the upper threshold is N execution entities.

When the listening thread detects that an execution entity is allocated, for example, in the foregoing IPC procedure, the second execution entity is allocated from the resource pool of the execution entities, and if a quantity of available execution entities obtained by subtracting the second execution entity from the resource pool is less than the lower threshold, a new execution entity is created in the resource pool. For example, if the quantity of available execution entities in the resource pool is less than M+1, one or more execution entities are created to supplement the quantity of execution entities in the resource pool. The lower threshold is properly set, so that when the sending process applies for an IPC service, an execution entity in the first receiving process can provide the service, and a quantity of available execution entities is controllable. This avoids a problem of reliability deterioration caused by blocking.

When the listening thread detects that an execution entity is released, for example, after the processing result is obtained, the second execution entity is released, and if a quantity that is of available execution entities and that is obtained by adding the second execution entity the resource pool is higher than the upper threshold, at least one execution entity is deleted from the resource pool. For example, if the quantity of execution entities in the resource pool exceeds N after the second execution entity is released, one or more execution entities may be deleted. The upper threshold is properly set, to prevent excessive available execution entities from causing excessive memory overheads.

When an execution entity is elastically added or deleted, it should be ensured that the quantity of execution entities in the resource pool remains between the upper and lower thresholds. This can avoid process congestion caused by an excessively small quantity of execution entities, and can also avoid excessively large memory overheads caused by an excessively large quantity of execution entities.

The second case is communication between a plurality of processes, that is, one sending process and a plurality of receiving processes. This case may also be referred to as inter-process communication of a multi-level IPC sequence.

The foregoing first receiving process is located in the multi-level IPC sequence, the multi-level IPC sequence further includes a second receiving process, and the second receiving process follows the first receiving process in a sequence of communicating with the sending process. It should be noted that only two levels of receiving processes, that is, the first receiving process and the second receiving process, are used as an example for description herein. Actually, the multi-level IPC sequence may include a plurality of receiving processes. Regardless of a quantity of receiving processes, IPC principles between every two consecutive receiving processes are the same. For IPC procedures of every two consecutive receiving processes, refer to the foregoing procedures of the sending process and the first receiving process for understanding.

Different from the foregoing two-level IPC procedure in the multi-level IPC sequence, each intermediate process transfers an identifier of a first process, page table information of the first process, a third value used to identify a data amount of fourth data transferred to a last process by using a second memory block, and an address of the second memory block.

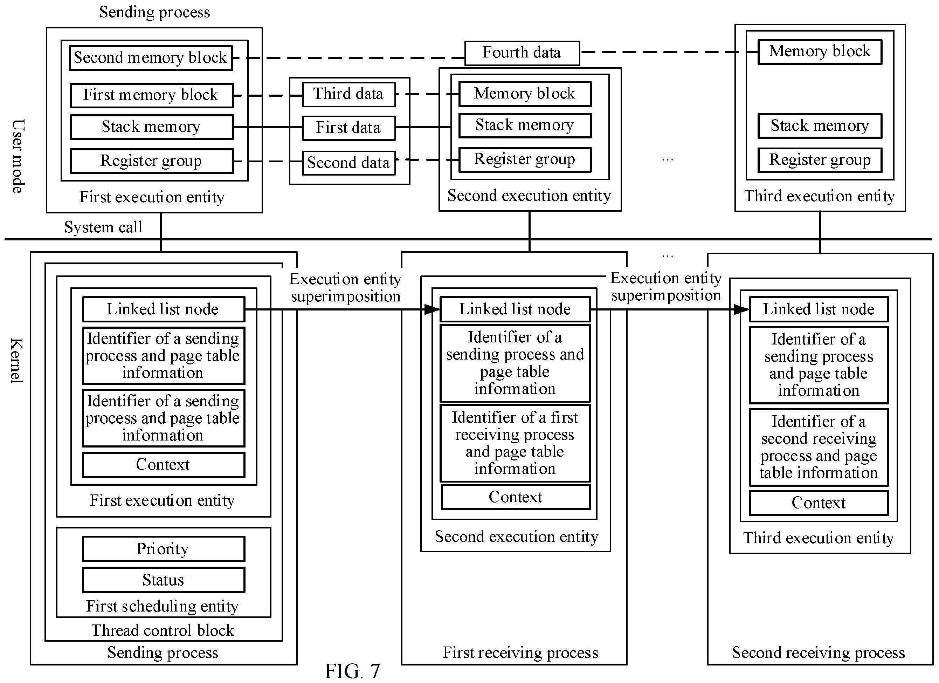

The procedure is combined into the foregoing procedure, and refer to FIG. 7 for understanding. As shown in FIG. 7, the second receiving process includes a third execution entity, and the third execution entity not only includes an identifier of a previous second receiving process and third page table information, but also includes an identifier of a sending process and first page table information.

The sending process and the first receiving process transfer the first data, the second data, and the third data to the first receiving process respectively by using the general-purpose register, the stack memory, and the first memory block in the manner described in the foregoing embodiment.

The sending process transfers a fourth value, the address of the second memory block, the identifier of the sending process, and the first page table information by using the second execution entity of the first receiving process. The third execution entity performs identity verification based on the identifier of the sending process, and replicates the fourth data from the second memory block of the first execution entity to a memory block of the third execution entity based on the address of the second memory block of the first execution entity, the first page table information of the first execution entity, and the third value.

In this embodiment of this application, when large data needs to be transferred at a plurality of levels in the multi-level IPC sequence, the first page table information of the sending process, the address of the second memory block of the first execution entity, and the data amount of the fourth data need to be recorded in only execution entities of intermediate processes at all levels (for example, the first receiving process). In this way, cross-process replication needs to be performed only based on the sending process and page table information of the second receiving process, so that the fourth data is transferred from the sending process to the second receiving process. It should be noted that another receiving process may be further included between the first receiving process and the second receiving process, whether one or more intermediate processes are included between the sending process and the second receiving process, in this application, only the address of the second memory block, the data amount of the fourth data, and the first page table information need to be transferred from the sending process to the second receiving process, and the second receiving process needs to replicate the fourth data only once. Therefore, data transmission performance is greatly improved.

The foregoing describes the computer system and the inter-process communication method. The following describes an inter-process communication apparatus provided in embodiments of this application with reference to the accompanying drawings. The apparatus may be a computer device.

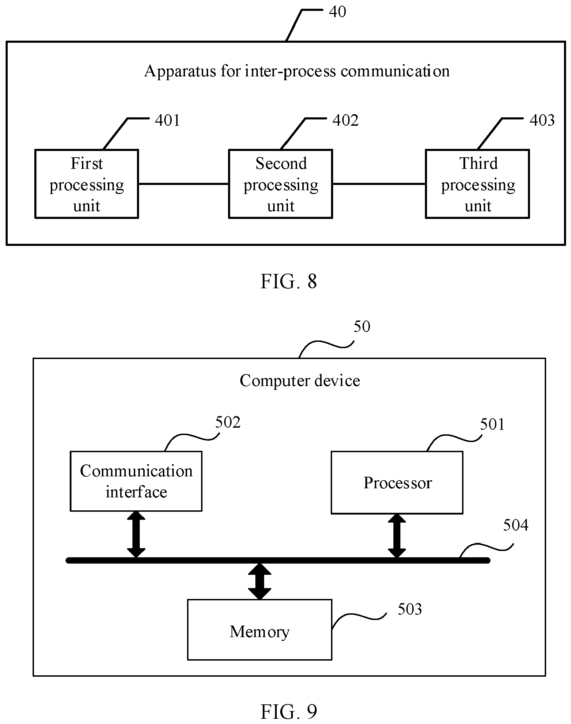

As shown in FIG. 8, an embodiment of an inter-process communication apparatus 40 provided in an embodiment of this application includes:
a first processing unit 401, configured to write, based on a calling convention, communication information into a register group of a first execution entity of a sending process, and write first data of target data into a stack memory of the first execution entity, where the communication information includes a first value, the first value indicates a data amount of the first data, the target data is data to be sent by the sending process to a first receiving process, and the calling convention indicates a sequence of writing the communication information into the register group and a sequence of writing the first data into the stack memory;
a second processing unit 402, configured to replicate information in the register group of the first execution entity to a context of the first execution entity, where the information in the register group includes the communication information and an address of the stack memory; and
a third processing unit 403, configured to replicate the first data from the stack memory of the first execution entity to a stack memory of a second execution entity of the first receiving process based on the first value in the context of the first execution entity and the address of the stack memory.

In this embodiment of this application, based on an invocation agreement, inter-process communication data is transferred by using a stack memory. Because an address of the stack memory always exists in a register group at a transmit end, the address of the stack memory does not need to be specially written for inter-process communication. This reduces communication overheads. In addition, at a receive end, the inter-process communication data may be directly read from a stack memory for processing, and the inter-process communication data does not need to be first read from a memory block and then written into the stack memory for processing. In this way, performance overheads of inter-process communication can be further reduced.

Optionally, the target data further includes second data, and the first processing unit 401 is further configured to: before replicating the information in the register group of the first execution entity to the context of the first execution entity, write, based on the calling convention, the second data into the register group of the first execution entity, where the calling convention further indicates a sequence of writing the second data into the register group

The second processing unit 402 is configured to replicate the second data, the communication information, and the address of the stack memory that are in the register group to the context of the first execution entity.

The third processing unit 403 is further configured to: replicate the context of the first execution entity to a context of the second execution entity; and write the context of the second execution entity into a register group of the second execution entity.

Optionally, the target data further includes third data, the communication information further includes a second value, the second value indicates a data amount of the third data stored in a first memory block of the first execution entity, and the first processing unit 401 writes an address of the first memory block into the register group of the first execution entity, and writes the third data into the first memory block of the first execution entity.

The third processing unit 403 is further configured to replicate the third data from the memory block of the first execution entity to a memory block of the second execution entity based on the second value and the address of the first memory block.

Optionally, the first execution entity further includes first page table information, the second execution entity further includes second page table information, and the first page table information and the second page table information are used to replicate the first data from the stack memory of the first execution entity to the stack memory of the second execution entity, or replicate the third data from the first memory block of the first execution entity to the memory block of the second execution entity.

Optionally, the third processing unit 403 is further configured to: superimpose the second execution entity on the first execution entity, and write a context of the second execution entity into the register group of the second execution entity, where the context of the second execution entity includes data in the context of the first execution entity; and read, based on the calling convention, all or a part of the target data from the register group of the second execution entity and the stack memory of the second execution entity, and process the all or the part of the target data to obtain a processing result; and the calling convention further indicates a sequence of reading the register group and the stack memory that are of the second execution entity.

Optionally, the third processing unit 403 is configured to call a function based on an identifier of the function in the register group of the second execution entity, to process the all or the part of the target data, to obtain the processing result.

Optionally, the first execution entity further includes an identifier of the sending process, and the third processing unit 403 is further configured to write the identifier of the sending process into the context of the second execution entity before the second execution entity is switched to a user mode, where the identifier of the sending process is used to authenticate an identity of the sending process after the second execution entity is switched to the user mode.

Optionally, the first processing unit 401 is further configured to: determine a first value based on the data amount of the target data and the calling convention; and generate the communication information based on the first value.

Optionally, the second processing unit 402 is further configured to allocate the second execution entity from a resource pool of execution entities. If a quantity that is of available execution entities in the resource pool and that is obtained by subtracting the second execution entity from the resource pool is less than a lower threshold, the second processing unit 402 is configured to create a new execution entity in the resource pool, where the lower threshold indicates a lower limit of the quantity of available execution entities in the resource pool.

Optionally, the second processing unit 402 is further configured to release the second execution entity after the processing result is obtained. If a quantity that is of available execution entities and that is obtained by adding the second execution entity the resource pool is greater than an upper threshold, the second processing unit 402 is configured to delete at least one execution entity from the resource pool, where the upper threshold indicates an upper limit of the quantity of available execution entities in the resource pool.

Optionally, the first receiving process is located in a multi-level IPC sequence, the multi-level IPC sequence further includes a second receiving process, and the second receiving process follows the first receiving process in a sequence of communicating with the sending process. The third processing unit 403 is further configured to: transfer, by using the second execution entity of the first receiving process, an address of a second memory block of the first execution entity, the first page table information of the first execution entity, and a third value to a third execution entity of the second receiving process, where the third value indicates a data amount of fourth data sent by the sending process to the second receiving process; and replicate the fourth data from the second memory block of the first execution entity to a memory block of the third execution entity based on the address of the second memory block of the first execution entity, the first page table information of the first execution entity, and the third value.

The third processing unit 403 is further configured to transfer, by using the second execution entity of the first receiving process, the identifier of the sending process to the third execution entity of the second receiving process, where the identifier of the sending process is used by the third execution entity to authenticate the identity of the sending process.

The described the inter-process communication apparatus 40 in the foregoing may be understood with reference to corresponding descriptions in the foregoing method embodiments. Details are not described herein again.

FIG. 9 is a schematic diagram of a possible logical structure of a computer device 50 according to an embodiment of this application. The computer device 50 includes a processor 501, a communication interface 502, a memory 503, and a bus 504. The processor 501, the communication interface 502, and the memory 503 are connected to each other through the bus 504. In this embodiment of this application, the processor 501 is configured to control and manage an action of the computer device 50. For example, the processor 501 is configured to perform steps 201 to 205 in the method embodiments in FIG. 2 to FIG. 7, and the communication interface 502 is configured to support the computer device 50 in performing communication. The memory 503 is configured to store program code and data that are of the computer device 50.

The processor 501 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 501 may be a combination of processors implementing a computing function, for example, a combination of one or more microprocessors, or a combination of a digital signal processor and a microprocessor. The bus 504 may be a peripheral component interconnect standard (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 8, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the foregoing inter-process communication methods in FIG. 2 to FIG. 7.

In another embodiment of this application, a computer program product is further provided. The computer program product includes computer-executable instructions, and the computer-executable instructions are stored in a computer-readable storage medium. When a processor of a device executes the computer-executable instructions, the device performs the foregoing inter-process communication methods in FIG. 2 to FIG. 7.

In another embodiment of this application, a chip system is further provided. The chip system includes a processor, and the processor is configured to support an inter-process communication apparatus in implementing the foregoing inter-process communication methods in FIG. 2 to FIG. 7. In a possible design, the chip system may further include a memory. The memory is configured to store program instructions and data that are necessary for the interprocess communication apparatus. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding procedure in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An inter-process communication method, wherein the method is applied to a computer system, and the method comprises:
writing, based on a calling convention, communication information into a register group of a first execution entity of a sending process, and writing first data of target data into a stack memory of the first execution entity, wherein the communication information comprises a first value, the first value indicates a data amount of the first data, the target data is data to be sent by the sending process to a first receiving process, and the calling convention indicates a sequence of writing the communication information into the register group and a sequence of writing the first data into the stack memory;
replicating information in the register group of the first execution entity to a context of the first execution entity, wherein the information in the register group comprises the communication information and an address of the stack memory; and
replicating the first data from the stack memory of the first execution entity to a stack memory of a second execution entity of the first receiving process based on the first value in the context of the first execution entity and the address of the stack memory.

2. The method according to claim 1, wherein the target data further comprises second data, and before the replicating information in the register group of the first execution entity to a context of the first execution entity, the method further comprises:
writing, based on the calling convention, the second data into the register group of the first execution entity, wherein the calling convention further indicates a sequence of writing the second data into the register group;
the replicating information in the register group of the first execution entity to a context of the first execution entity comprises:
replicating the second data, the communication information, and the address of the stack memory that are in the register group to the context of the first execution entity; and
the method further comprises:
replicating the context of the first execution entity into a context of the second execution entity; and
writing the context of the second execution entity into a register group of the second execution entity.

3. The method according to claim 1 or 2, wherein the target data further comprises third data, the communication information further comprises a second value, the second value indicates a data amount of the third data stored in a first memory block of the first execution entity, and the method further comprises:
writing an address of the first memory block into the register group of the first execution entity, and writing the third data into the first memory block of the first execution entity; and
replicating the third data from the first memory block of the first execution entity to a memory block of the second execution entity based on the second value and the address of the first memory block.

4. The method according to claim 3, wherein the first execution entity further comprises first page table information, and the second execution entity further comprises second page table information; and the first page table information and the second page table information are used to replicate the first data from the stack memory of the first execution entity to a stack memory of the second execution entity, or replicate the third data from the first memory block of the first execution entity to a memory block of the second execution entity.

5. The method according to any one of claims 1 to 4, wherein the method further comprises:
superimposing the second execution entity on the first execution entity, and writing a context of the second execution entity into the register group of the second execution entity, wherein the context of the second execution entity comprises data in the context of the first execution entity; and
reading, based on the calling convention, all or a part of the target data from the register group of the second execution entity and the stack memory of the second execution entity, and processing the all or the part of the target data to obtain a processing result; and the calling convention further indicates a sequence of reading the register group and the stack memory that are of the second execution entity.

6. The method according to claim 5, wherein the communication information further comprises an identifier of a function used to process the target data; and
the processing the all or the part of the target data to obtain a processing result comprises:
invoking the function based on the identifier of the function in the register group of the second execution entity, to process the all or the part of the target data, to obtain the processing result.

7. The method according to claim 5 or 6, wherein the first execution entity further comprises an identifier of the sending process, and the method further comprises:
writing the identifier of the sending process into the context of the second execution entity, wherein the identifier of the sending process is used by the second execution entity to authenticate an identity of the sending process.

8. The method according to any one of claims 1 to 7, wherein the method further comprises:
allocating the second execution entity from a resource pool of execution entities; and
creating a new execution entity in the resource pool if a quantity that is of available execution entities and that is obtained by subtracting the second execution entity from the resource pool is less than a lower threshold, wherein the lower threshold indicates a lower limit of the quantity of available execution entities in the resource pool.

9. The method according to any one of claims 5 to 7, wherein the method further comprises:
after the processing result is obtained, releasing the second execution entity; and
if a quantity that is of available execution entities and that is obtained by adding the second execution entity to the resource pool is greater than an upper threshold, deleting at least one execution entity from the resource pool, wherein the upper threshold indicates an upper limit of the quantity of available execution entities in the resource pool.

10. The method according to any one of claims 1 to 9, wherein the first receiving process is located in a multi-level IPC sequence, the multi-level IPC sequence further comprises a second receiving process, and the second receiving process follows the first receiving process in a sequence of communicating with the sending process; and the method further comprises:
transferring, by using the second execution entity of the first receiving process, an address of a second memory block of the first execution entity, the first page table information of the first execution entity, and a third value to a third execution entity of the second receiving process, wherein the third value indicates a data amount of fourth data sent by the sending process to the second receiving process; and
replicating the fourth data from the second memory block of the first execution entity to a memory block of the third execution entity based on the address of the second memory block of the first execution entity, the first page table information of the first execution entity, and the third value.

11. The method according to claim 10, wherein the method further comprises:
transferring, by using the second execution entity of the first receiving process, the identifier of the sending process to the third execution entity of the second receiving process, wherein the identifier of the sending process is used by the third execution entity to authenticate the identity of the sending process.

12. A computer-readable storage medium, wherein the computer-readable storage medium stores a computer program, and when the computer program is executed by a processor, the method according to any one of claims 1 to 11 is implemented.

13. A computing device, comprising a processor and a computer-readable storage medium storing a computer program, wherein
the processor is coupled to the computer-readable storage medium, and when the computer program is executed by the processor, the method according to any one of claims 1 to 11 is implemented.

14. A chip system, comprising a processor, wherein the processor is invoked to perform the method according to any one of claims 1 to 11.

15. A computer program product, comprising a computer program, wherein when being executed by one or more processors, the computer program is used to implement the method according to any one of claims 1 to 11.
